# EUROPEAN PATENT APPLICATION

(11) **EP 4 723 352 A1**
(43) Date of publication of application: **08.04.2026**
(21) Application number: 24204972.4
(22) Date of filing: 07.10.2024
(51) Int. Cl.: H01M 50/367, H01M 50/392

(54) **BATTERY HOUSING WITH UNIDIRECTIONAL VENTING PATH**

(71) Applicant: Volvo Truck Corporation, 405 08 Göteborg (SE)
(72) Inventor: MOVAGHAR, Amirreza, 412 76 Göteborg (SE); IRANNEZHAD, Mike, 413 30 Göteborg (SE)
(74) Representative: Kransell & Wennborg KB

(57) **Abstract**

A battery housing (100) for a vehicle, the battery housing comprising: a plurality of battery cells (102) arranged in at least one row, each battery cell comprising a vent (104) arranged on a top side of the battery cell and configured to release gas and particles; a venting channel (106) running circumferentially around the plurality of battery cells, the venting channel being closed in a first end (108), forming a first portion (110) of the venting channel adjacent to the first end, and having an opening (112) in a second end (114), forming a second portion (116) of the venting channel on an opposite side of the battery cells from the first portion of the venting channel, to enable unidirectional flow of gas in the venting channel; a top structure (118) dividing the battery cells into compartments (120), each compartment being open towards the first portion of the circumferential venting channel and closed towards the second portion of the circumferential venting channel; and a plurality of particle trapping structures (122a-b) arranged in the venting channel, the particle trapping structures being configured to trap particles in a gas flow comprising gas and particles.

## Description

### TECHNICAL FIELD

The disclosure relates generally to battery packs for vehicles. In particular aspects, the disclosure relates to a battery pack comprising a unidirectional venting path for venting heated gas and particles during thermal runaway event. The disclosure can be applied to heavy-duty vehicles, such as trucks, buses, and construction equipment, among other vehicle types. The disclosure can be applied to marine vessels and the like. Although the disclosure may be described with respect to a particular vehicle, the disclosure is not restricted to any particular vehicle.

### BACKGROUND

Thermal runaway in battery packs for vehicles refers to a chain reaction of escalating heat generation within the battery cells. This process can be triggered by factors like overcharging, internal short circuits, or physical damage. As the temperature rises, it can lead to a self-perpetuating cycle, causing cells to heat up rapidly, potentially leading to gas release, fire, or even explosion. Managing this runaway reaction is critical to prevent severe damage to the battery pack, vehicle, and surrounding environment.

In the event of a thermal runaway, efficient management of hot gases and particles within the battery pack is crucial to prevent rapid thermal spread. Strategically designed chimneys within the pack are utilized to guide and channel hot gases, ensuring controlled pathways that inhibit thermal propagation and limit the acceleration of the runaway process. Vents strategically positioned within the pack are set to open at specific pressures, enabling the release of accumulated hot gases. Meanwhile, specialized trapping mechanisms are deployed at designated locations within the pack to contain and prevent particles from exiting. This containment is essential to mitigate the risk of these particles igniting external gases, reducing potential hazards outside the battery pack. Accordingly, it is desirable to provide improved battery housing designs for mitigating damage caused by a thermal runaway event.

### SUMMARY

According to a first aspect of the disclosure, it is provided a battery housing for a vehicle, the battery housing comprising: a plurality of battery cells arranged in at least one row, each battery cell comprising a vent arranged on a top side of the battery cell and configured to release gas and particles; a venting channel running circumferentially around the plurality of battery cells, the venting channel being closed in a first end, forming a first portion of the venting channel adjacent to the first end, and having an opening in a second end, forming a second portion of the venting channel on an opposite side of the battery cells from the first portion of the venting channel, to enable unidirectional flow of gas in the venting channel; a top structure dividing the battery cells into compartments, each compartment being open towards the first portion of the circumferential venting channel and closed towards the second portion of the circumferential venting channel; and a plurality of particle trapping structures arranged in the venting channel, the particle trapping structures being configured to trap particles in a gas flow comprising gas and particles.

A technical benefit may include that the circumferential venting channel, closed at one end and open at the opposite end, establishes a controlled, unidirectional flow path for the gases, which prevents backflow and reduces the risk of igniting adjacent battery cells. The inclusion of a top structure that divides the battery cells into separate compartments further ensures that exposure to thermal runaway gases is limited to a minimal number of cells, thereby reducing the potential for thermal propagation.

Furthermore, the particle trapping structures within the venting channel are positioned to capture particles present in the gas flow, preventing the particles from escaping the battery pack and igniting external gases. This arrangement improves the safety of the battery housing by minimizing the risk of external fires or explosions. The combination of a controlled venting pathway and strategically located particle trapping mechanisms enhances the thermal management of the battery pack, reduces the likelihood of damage, and increases the overall safety of the vehicle or other application using the battery pack.

Optionally, in some examples, including in at least one preferred example, the particle trapping structures in the second portion of the venting channel are configured to capture gradually smaller particles along the length of the venting channel. A technical benefit may include a more efficient and gradual filtration process, reducing the risk of clogging by allowing larger particles to be trapped earlier, while smaller particles are captured further along the venting channel, thereby maintaining a steady flow of gas and ensuring consistent performance of the venting system.

Optionally, in some examples, including in at least one preferred example, the particle trapping structures are configured to create a vortex in the gas flowing in the venting channel. A technical benefit may include the enhanced capture of particles by creating turbulent flow conditions, which increase the likelihood of particles being directed toward the trapping structures, improving the overall effectiveness of particle containment and minimizing the risk of external ignition.

Optionally, in some examples, including in at least one preferred example, the particle trapping structures comprise vertically aligned ridges protruding from sidewalls of the venting channel. A technical benefit may include improved control over the gas flow direction and enhanced particle capture efficiency, as the vertically aligned ridges create turbulence and increase the surface area for particle impact, leading to a more reliable trapping mechanism.

Optionally, in some examples, including in at least one preferred example, the vertically aligned ridges are arranged to extend alternatingly from a roof and from a floor of the venting channel and are configured to extend along at least half the height of the venting channel. A technical benefit may include a more distributed trapping mechanism that captures particles from different layers of the gas flow, reducing the likelihood of particle escape and optimizing the use of available space within the venting channel.

Optionally, in some examples, including in at least one preferred example, the vertically aligned ridges extend along the full height of the venting channel. A technical benefit may include maximizing the contact area for gas flow interaction, leading to improved particle trapping efficiency and reducing the chances of particles bypassing the ridges, thereby enhancing overall safety.

Optionally, in some examples, including in at least one preferred example, the particle trapping structures in the first portion of the venting channel protrude the same distance from a sidewall of the venting channel, and the particle trapping structures in the second portion of the venting channel protrude with an increasing distance from the sidewall of the venting channel along the length of the venting channel. A technical benefit may include an optimized design for particle capture that adapts to different particle sizes and flow conditions, reducing the risk of clogging by allowing the venting channel to manage varying particle loads more effectively where larger particles are captured earlier in the channel.

Optionally, in some examples, including in at least one preferred example, all compartments have an opening only towards one and the same sidewall of the battery housing. A technical benefit may include improved control of gas flow direction, ensuring that gases are consistently directed towards the venting channel and away from sensitive components, which enhances the overall safety and integrity of the battery pack. Moreover, the unidirectional venting direction ensures that particle trapping is consistent irrespective of the cell where thermal runaway occur.

Optionally, in some examples, including in at least one preferred example, a transition between the first portion and the second portion of the venting channel is located after and adjacent to an opening of a last compartment as seen from the first end of the venting channel. A technical benefit may include ensuring consistent particle trapping properties throughout the battery housing, regardless of which cell undergoes a thermal runaway event. By directing all gases towards a single sidewall, the particle trapping efficiency remains uniform, optimizing containment performance and maintaining the effectiveness of the venting system under all possible thermal runaway scenarios.

Optionally, in some examples, including in at least one preferred example, the particle trapping structures arranged on a sidewall of the venting channel facing an outside of the battery housing are made from a first material, and the particle trapping structures arranged on a sidewall of the venting channel facing the battery cells are made from a second material. A technical benefit may include tailored thermal and mechanical properties of the trapping structures, allowing for better thermal insulation towards the battery cells and improved heat dissipation towards the outside, enhancing both safety and performance.

Optionally, in some examples, including in at least one preferred example, a thermal conductivity of the first material is higher than a thermal conductivity of the second material. A technical benefit may include more effective heat management, where the higher thermal conductivity material can dissipate heat away from the battery pack more quickly, while the lower thermal conductivity material insulates the battery cells from external heat sources.

Optionally, in some examples, including in at least one preferred example, at least a subset of the plurality of particle trapping structures are made from a thermal-resistant plastic. A technical benefit may include improved resistance to high temperatures during a thermal runaway event, preventing deformation or melting of the trapping structures and maintaining the integrity and function of the venting system.

Optionally, in some examples, including in at least one preferred example, at least a subset of the plurality of particle trapping structures are made from steel and/or aluminum. A technical benefit may include increased structural strength and durability of the trapping structures, allowing them to withstand the impact of high-velocity particles and maintain effectiveness over time, even in harsh operating conditions.

Optionally, in some examples, including in at least one preferred example, the top structure comprises dividing walls and a top plate. A technical benefit may include enhanced containment of gases within individual compartments, reducing the spread of thermal runaway effects across multiple cells and improving the safety and reliability of the battery pack.

Optionally, in some examples, including in at least one preferred example, the top structure is made from mica. A technical benefit may include advantageous thermal and electrical insulation properties, providing additional protection against heat and electrical faults during thermal runaway events, which enhances the overall safety of the battery housing.

Optionally, in some examples, including in at least one preferred example, a height of the venting channel is at least equal to the height of the battery cells. A technical benefit may include ensuring adequate space for gas flow above the cells, which facilitates effective venting and reduces the risk of pressure build-up that could damage the battery pack.

Optionally, in some examples, including in at least one preferred example, a height of the venting channel is equal to an inner height of the battery housing. A technical benefit may include maximizing the available volume for gas management within the battery housing, improving the efficiency of gas evacuation and reducing the risk of overheating or gas accumulation.

Optionally, in some examples, including in at least one preferred example, the opening of the venting channel comprises a venting outlet. A technical benefit may include providing a dedicated exit for gases during a thermal runaway event, which ensures controlled venting and minimizes the risk of damage to other components within the battery housing.

Optionally, in some examples, including in at least one preferred example, the venting outlet is configured to open at a threshold pressure difference between an inside and an outside of the battery housing. A technical benefit may include preventing premature or unnecessary opening of the venting outlet, ensuring that venting only occurs when a significant pressure build-up is detected, which helps maintain the integrity and safety of the battery pack.

There is also provided a vehicle comprising a battery housing according to any of the previously described examples. A technical benefit may include providing enhanced safety and reliability to the vehicle by incorporating a battery housing with an effective thermal management and particle containment system, which reduces the risk of fire, explosion, or damage during a thermal runaway event.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a top-view of an exemplary battery housing according to an example.
**FIG. 2** is a cross section of a portion of an exemplary battery housing according to an example.
**FIG. 3** is a top-view of an exemplary battery housing according to an example.
**FIGS. 4A-B** are a top-view and a cross-section view of an exemplary battery housing according to an example.
**FIGS. 5A-B** are a top-view and a cross-section view of an exemplary battery housing according to an example.
**FIG. 6** is a vehicle comprising an exemplary battery housing according to an example.

### DETAILED DESCRIPTION

The detailed description set forth below provides information and examples of the disclosed technology with sufficient detail to enable those skilled in the art to practice the disclosure.

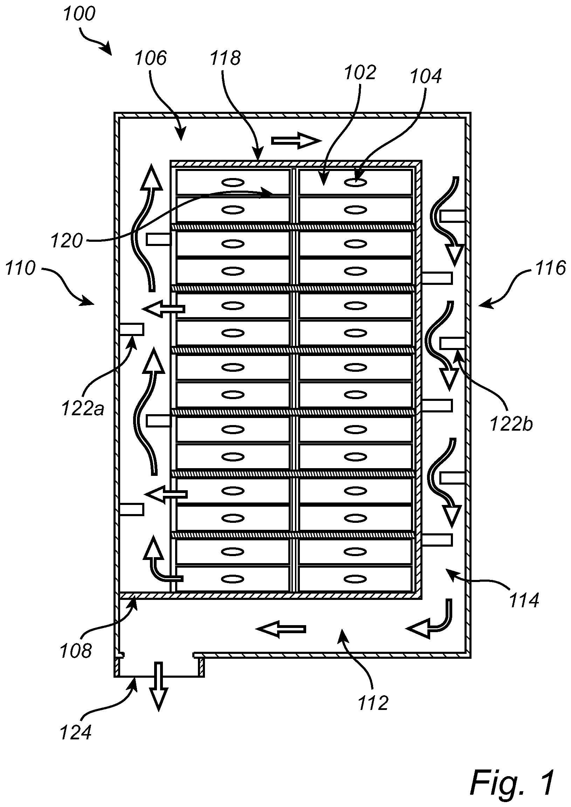

Fig. 1 schematically illustrates a top-view of a battery housing 100 for a vehicle. The battery housing 100 comprises a plurality of battery cells 102 arranged in at least one row. Each battery cell 102 includes a vent 104 positioned on a top side of the battery cell 102. The vent 104 is configured to release gas and particles generated during a thermal runaway event or any other condition that causes pressure build-up within the cells. The release of gas and particles through the vent 104 allows for controlled ventilation and mitigates the risk of pressure accumulation that could lead to damage or safety hazards.

The battery housing 100 further includes a venting channel 106 that runs circumferentially around the plurality of battery cells 102. The venting channel 106 provides a controlled pathway for the flow of gas and particles released from the battery cells 102 during a thermal runaway event. The venting channel 106 is closed at a first end 108, forming a first portion 110 adjacent to the first end 108. The first portion 110 serves as the initial section for receiving the gases and particles from the battery cells 102. On the opposite side of the battery cells 102, the venting channel 106 has an opening 112 at a second end 114, forming a second portion 116. The design of the venting channel 106 with a closed first end 108 and an open second end 114 ensures a unidirectional flow of gas within the channel, guiding the gas from the first portion 110 to the second portion 116. The configuration prevents backflow and promotes efficient evacuation of the gases, thereby reducing the risk of igniting adjacent cells and ensuring safer operation of the battery housing 100.

Positioned above the battery cells 102 is a top structure 118 that divides the battery cells 102 into multiple compartments 120. Each compartment 120 is configured to be open towards the first portion 110 of the circumferential venting channel 106 and closed towards the second portion 116 of the circumferential venting channel 106. This arrangement directs the flow of gases and particles released from the battery cells 102 towards the first portion 110 of the venting channel 106. The compartments 120 isolate the battery cells 102 from one another, limiting the exposure of other cells to thermal runaway gases from any affected cell. By minimizing the number of cells exposed to these gases, the top structure 118 and the compartment design improve the safety and reliability of the battery housing 100, reducing the potential for thermal propagation.

The battery housing 100 further comprises a plurality of particle trapping structures 122a-b arranged within the venting channel 106. The particle trapping structures 122a-b are configured to trap particles carried by the gas flow, preventing particles from exiting the battery housing 100. The particle trapping structures 122a-b may be designed in various shapes, such as ridges or baffles, to preferably create turbulence within the gas flow, thereby increasing the likelihood that particles will collide with and be retained by the particle trapping structures 122a-b. The placement, size and orientation of the particle trapping structures 122a-b can be optimized for a given implementation to improve the effectiveness in capturing particles of different sizes, preventing clogging, and facilitating consistent gas flow through the venting channel 106. The size and shape of particle trapping structures 122a-b can thus be modified in many different ways, not limited to the specific examples described herein.

Particle trapping structures 122a-b arranged on a sidewall of the venting channel 106 facing an outside of the battery housing 100 may be made from a first material and particle trapping structures arranged on a sidewall of the venting channel 106 facing the battery cells 102 may made from a second material, wherein a thermal conductivity of the first material is higher than a thermal conductivity of the second material. Moreover, at least a subset of the plurality of particle trapping structures 122a-b can be made from a thermal resistant plastic. Furthermore, at least a subset of the plurality of particle trapping structures 122a-b can be made from steel and/or aluminum.

In the example implementation illustrated in Fig. 1, the first portion 110 of the venting channel 106 is defined as being the part of the channel running along one side of the battery housing 100. The side of the battery housing comprising the first portion 110 of the venting channel 106 is the same side where the compartments are 120 open. In other words, the compartments 120 are only open towards one side of the battery housing 100. The second portion 116 of the venting channel 106 is thereby described by the remaining portion of the venting channel 106 spanning to the opening 112 of the venting channel 106, here including the remaining three sides of the battery housing 100.

The opening 112 of the venting channel may advantageously comprise a venting outlet 124 configured to open at a threshold pressure difference between an inside and an outside of the battery housing 100.

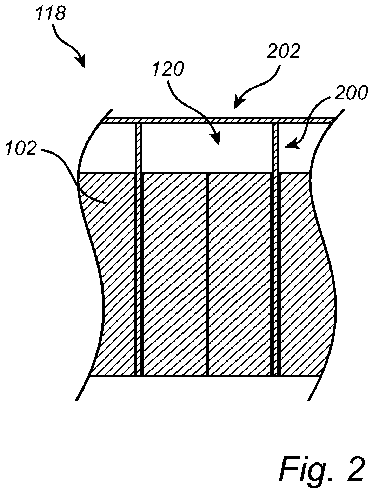

Fig. 2 is a cross-section side view of a portion of the battery housing along the line A-A of Fig. 1, illustrating how battery cells are divided into compartments 120 by a top structure 118 comprising vertically aligned dividing walls 200 and a horizontal top plate 202. In the illustrated example, each compartment 120 includes 2x2 battery cells, but any suitable division of cells could be used, and it would also be possible to have only one cell per compartment. Moreover, it would also be possible to use the described compartmentalized approach for other configurations of the battery cell array. The top plate 202 may also include or form part of a busbar holder, thereby integrating the top structure 118 with other features of the battery housing 100. For example, the top structure 118 can be made from mica.

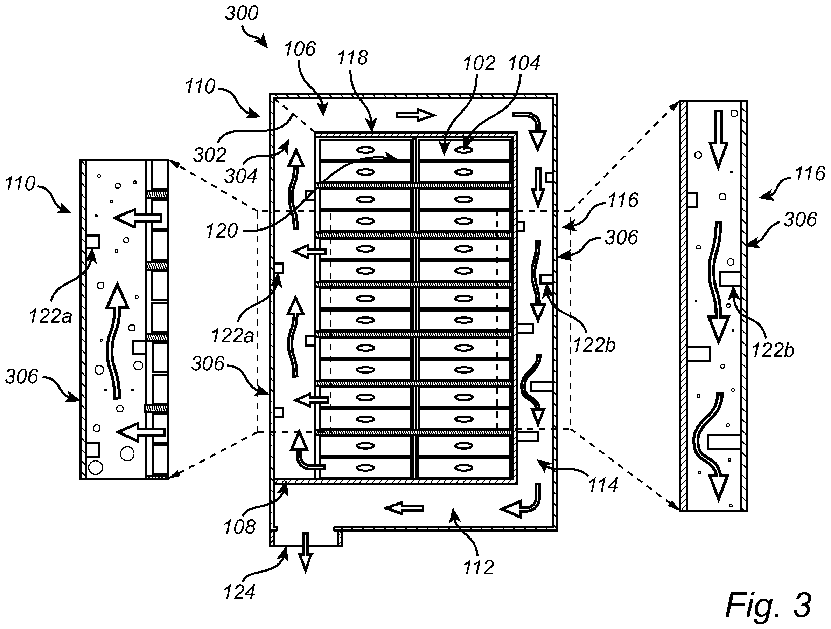

Fig. 3 schematically illustrates an example embodiment of a battery housing 300 where particle trapping structures 122b in the second portion of the venting channel 106 are configured to capture gradually smaller particles along the length of the venting channel 106. Fig. 3 further illustrates the transition 302 between the first portion 110 and the second portion 116 of the venting channel 106 where the first portion 110 ends at the end 302 of the last compartment opening 304 as seen in the flow direction. The transition 302 between the first portion and second portion of the venting channel 106 is thereby located after and adjacent to the opening 304 of a last compartment 120 as seen from the first end 108 of the venting channel, i.e. in the flow direction of the venting channel 106. Particle trapping structures 122b configured to capture gradually smaller particles along the length of the venting channel 106 may thus be located anywhere in the second portion 116 of the venting channel 106 after the transition 302.

In the illustrated example, particle trapping structures 122a-b are provided in the form of vertically aligned ridges protruding from sidewalls 306 of the venting channel 106. In the first portion 110 of the venting channel 106, the particle trapping structures 122a protrude by substantially the same distance from the sidewall 306 of the venting channel 106, whereas in the second portion 116 of the venting channel 106, the particle trapping structures 122b protrude with an increasing distance from the sidewall 306 of the venting channel 106 along the length of the venting channel 106. The particle trapping structures 122a-b create a vortex in the gas flowing in the venting channel 106 which causes particles in the gas flow to collide with the particle trapping structures 122a-b since the particles cannot follow the rapid change in gas flow direction caused by the turbulence. Particles that collide with the barriers in the venting channel 106 formed by the particle trapping structures 122a-b will adhere to the particle trapping structures 122a-b and are thereby prevented from escaping to the environment outside of the battery housing 100.

With increasing protrusion of the ridges from the sidewalls 306 of the venting channel 106, the turbulence is increased as well as the surface area of the particle trapping structures 122b leading to an increased capture efficiency, which in turn lead to the capture of smaller and smaller particles along the flow direction of the venting channel 106. Even though the present example describe particle trapping structures in the form of ridges or features protruding from the sidewalls 306 of the venting channel, many different configurations of particle structures would be possible to use to the same effect. For example, particle trapping structures may be formed as grids or plates with gradually smaller openings to capture gradually smaller particles along the length of the channel. A combination of different types of particle trapping structures within the venting channel 106 could also be used.

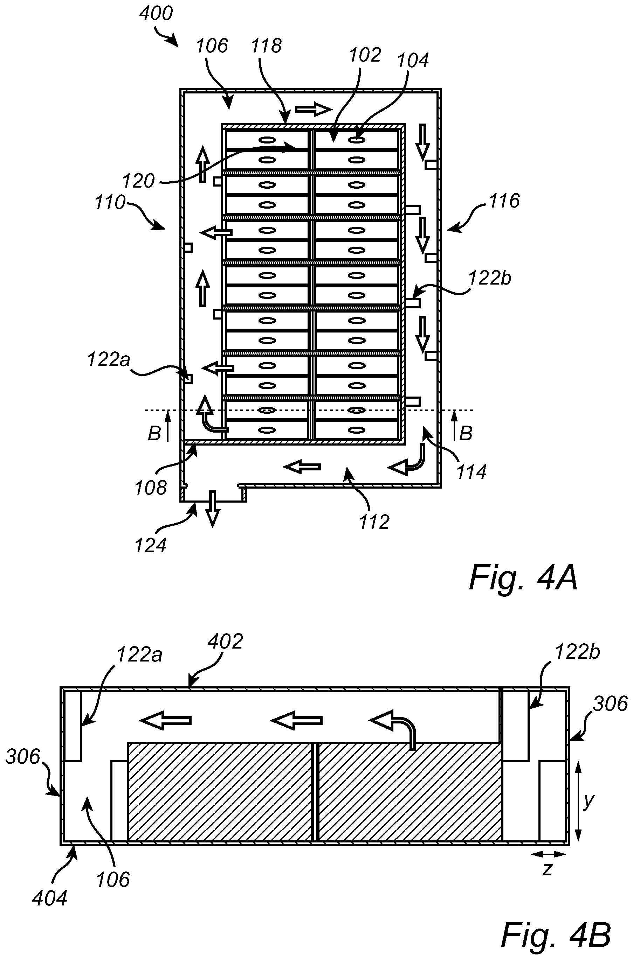

Figs. 4A-B schematically illustrate an example embodiment of a battery housing 400 where Fig. 4A is a top-view and Fig. 4B is a cross-section as seen from a short side of the battery housing along the line B-B. Here, particle trapping structures 122a-b in the form of vertically aligned ridges are arranged to extend alternatingly from a roof 402 and from a floor 404 of the venting channel 106 and configured to extend along at least half the vertical height of the venting channel 106. The illustrated y-direction describes the vertical direction of the battery housing 400 and the z-direction is a transversal direction in which the particle trapping structures 122a-b protrude from the sidewalls 306 of the battery housing 400. Fig. 4B also illustrates how particle trapping structures 122b in the second portion 116 of the venting channel 106 protrude further in the z-direction from a sidewall 306 compared to particle trapping structures 122a in the first portion 110 of the venting channel 106 to thereby capture smaller particles in the gas flow.

Fig. 4B further illustrates that a height of the venting channel 106 in the y-direction is at least equal to the height of the battery cells 102, and in the illustrated example, the height of the venting channel 106 is equal to a maximum available inner height of the battery housing 400. The venting channel 106 can thereby utilize the maximum available volume within the battery housing 400.

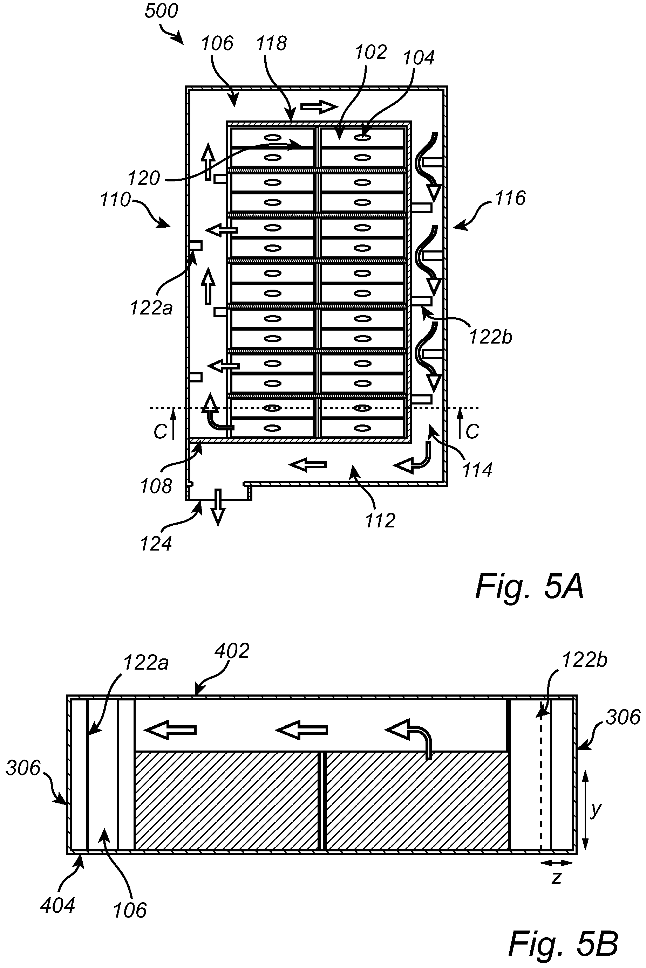

Figs. 5A-B schematically illustrate an example embodiment of a battery housing 500 where Fig. 5A is a top-view and Fig. 5B is a cross-section as seen from a short side of the battery housing along the line C-C. In Figs. 5A-B it can be seen that the particle trapping structures in the form of vertically aligned ridges 122a-b are arranged to extend along the full vertical height of the venting channel 106 in the y-direction. Moreover, the particle trapping structures 122b in the second portion 116 of the venting channel 106 extend further from the sidewall in the z-direction compared to the particle trapping structure 122a in the first portion 110 of the venting channel 106. The particle trapping structures 122b in the in the second portion 116 of the venting channel 106 also extend further than half the width of the venting channel 116 so as to overlap with each other as seen in Fig. 5B, thereby forcing the gas flow to change direction when passing through the venting channel 106, creating turbulence which facilitates particle trapping.

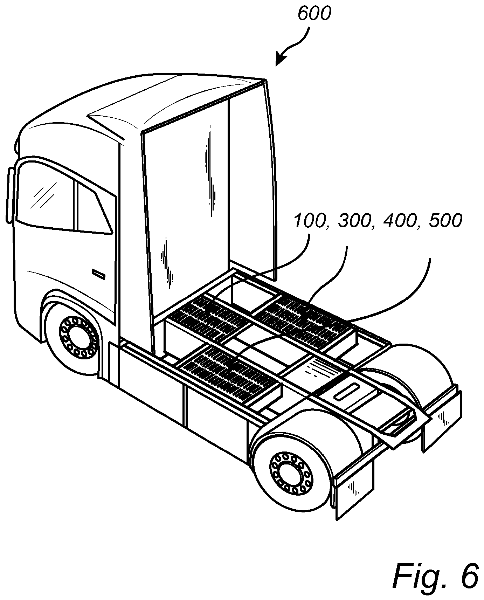

Fig. 6 schematically illustrates a vehicle 600 comprising a battery housing 100, 300, 400, 500 according to any of the described examples.

Example 1. A battery housing (100, 300) for a vehicle, the battery housing comprising: a plurality of battery cells (102) arranged in at least one row, each battery cell comprising a vent (104) arranged on a top side of the battery cell and configured to release gas and particles; a venting channel (106) running circumferentially around the plurality of battery cells, the venting channel being closed in a first end (108), forming a first portion (110) of the venting channel adjacent to the first end, and having an opening (112) in a second end (114), forming a second portion (116) of the venting channel on an opposite side of the battery cells from the first portion of the venting channel, to enable unidirectional flow of gas in the venting channel; a top structure (118) dividing the battery cells into compartments (120), each compartment being open towards the first portion of the circumferential venting channel and closed towards the second portion of the circumferential venting channel; and a plurality of particle trapping structures (122a-b) arranged in the venting channel, the particle trapping structures being configured to trap particles in a gas flow comprising gas and particles.

Example 2. The battery housing according to example 1, wherein the particle trapping structures in the second portion of the venting channel are configured to capture gradually smaller particles along the length of the venting channel.

Example 3. The battery housing according to example 1, wherein the particle trapping structures are configured to create a vortex in the gas flowing in the venting channel.

Example 4. The battery housing according to any one of the preceding examples, wherein the particle trapping structures comprise vertically aligned ridges protruding from sidewalls (306) of the venting channel.

Example 5. The battery housing according to example 4, wherein the vertically aligned ridges are arranged to extend alternatingly from a roof and from a floor of the venting channel and configured to extend along at least half the height of the venting channel.

Example 6. The battery housing according to example 4, wherein the vertically aligned ridges extend along the full height of the venting channel.

Example 7. The battery housing according to any one of the preceding examples, wherein particle trapping structures (122a) in the first portion of the venting channel protrude the same distance from a sidewall of the venting channel, and wherein particle trapping structures (122b) in the second portion of the venting channel protrude with an increasing distance from the sidewall of the venting channel along the length of the venting channel.

Example 8. The battery housing according to any one of the preceding examples, wherein all compartments have an opening only towards one and the same sidewall of the battery housing.

Example 9. The battery housing according to any one of the preceding examples, wherein a transition (302) between the first portion and second portion of the venting channel is located after and adjacent to an opening of a last compartment as seen from the first end of the venting channel.

Example 10. The battery housing according to any one of the preceding examples, wherein particle trapping structures arranged on a sidewall of the venting channel facing an outside of the battery housing is made from a first material and particle trapping structures arranged on a sidewall of the venting channel facing the battery cells are made from a second material.

Example 11. The battery housing according to example 10, wherein a thermal conductivity of the first material is higher than a thermal conductivity of the second material.

Example 12. The battery housing according to any one of the preceding examples, wherein at least a subset of the plurality of particle trapping structures are made from a thermal resistant plastic.

Example 13. The battery housing according to any one of examples 1 to 11, wherein at least a subset of the plurality of particle trapping structures are made from steel and/or aluminum.

Example 14. The battery housing according to any one of the preceding examples, wherein the top structure (118) comprises dividing walls (200) and a top plate (202).

Example 15. The battery housing according to any one of the preceding examples, wherein the top structure is made from mica.

Example 16. The battery housing according to any one of the preceding examples, wherein a height of the venting channel is at least equal to the height of the battery cells.

Example 17. The battery housing according to any one of the preceding examples, wherein a height of the venting channel is equal to an inner height of the battery housing.

Example 18. The battery housing according to any one of the preceding examples, wherein the opening of the venting channel comprises a venting outlet.

Example 19. The battery housing according to any one of the preceding examples, wherein the venting outlet is configured to open at a threshold pressure difference between an inside and an outside of the battery housing.

Example 20. A vehicle (600) comprising a battery housing (100, 200, 300, 400) according to any one of the preceding examples.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery housing (100, 300, 400, 500) for a vehicle, the battery housing comprising:
a plurality of battery cells (102) arranged in at least one row, each battery cell comprising a vent (104) arranged on a top side of the battery cell and configured to release gas and particles;
a venting channel (106) running circumferentially around the plurality of battery cells, the venting channel being closed in a first end (108), forming a first portion (110) of the venting channel adjacent to the first end, and having an opening (112) in a second end (114), forming a second portion (116) of the venting channel on an opposite side of the battery cells from the first portion of the venting channel, to enable unidirectional flow of gas in the venting channel;
a top structure (118) dividing the battery cells into compartments (120), each compartment being open towards the first portion of the circumferential venting channel and closed towards the second portion of the circumferential venting channel; and
a plurality of particle trapping structures (122a-b) arranged in the venting channel, the particle trapping structures being configured to trap particles in a gas flow comprising gas and particles.

2. The battery housing according to claim 1, wherein the particle trapping structures in the second portion of the venting channel are configured to capture gradually smaller particles along the length of the venting channel.

3. The battery housing according to claim 1, wherein the particle trapping structures are configured to create a vortex in the gas flowing in the venting channel.

4. The battery housing according to any one of the preceding claims, wherein the particle trapping structures comprise vertically aligned ridges protruding from sidewalls (306) of the venting channel.

5. The battery housing according to claim 4, wherein the vertically aligned ridges are arranged to extend alternatingly from a roof and from a floor of the venting channel and configured to extend along at least half the height of the venting channel.

6. The battery housing according to claim 4, wherein the vertically aligned ridges extend along the full height of the venting channel.

7. The battery housing according to any one of the preceding claims, wherein particle trapping structures (122a) in the first portion of the venting channel protrude the same distance from a sidewall of the venting channel, and wherein particle trapping structures (122b) in the second portion of the venting channel protrude with an increasing distance from the sidewall of the venting channel along the length of the venting channel.

8. The battery housing according to any one of the preceding claims, wherein all compartments have an opening only towards one and the same sidewall of the battery housing.

9. The battery housing according to any one of the preceding claims, wherein a transition (302) between the first portion and second portion of the venting channel is located after and adjacent to an opening of a last compartment as seen from the first end of the venting channel.

10. The battery housing according to any one of the preceding claims, wherein particle trapping structures arranged on a sidewall of the venting channel facing an outside of the battery housing is made from a first material and particle trapping structures arranged on a sidewall of the venting channel facing the battery cells are made from a second material.

11. The battery housing according to claim 10, wherein a thermal conductivity of the first material is higher than a thermal conductivity of the second material.

12. The battery housing according to any one of the preceding claims, wherein at least a subset of the plurality of particle trapping structures are made from a thermal resistant plastic.

13. The battery housing according to any one of the preceding claims, wherein a height of the venting channel is at least equal to the height of the battery cells.

14. The battery housing according to any one of the preceding claims, wherein the top structure (118) comprises dividing walls (200) and a top plate (202).

15. A vehicle (600) comprising a battery housing (100, 400, 500) according to any one of the preceding claims.
